(19) **Europäisches Patentamt**

**European Patent Office**

**Office européen des brevets**

(11) **EP 0 611 491 B1**

(12) **EUROPEAN PATENT SPECIFICATION**

(45) Date of publication and mention
of the grant of the patent:
**29.12.1997 Bulletin 1997/52**

(21) Application number: **92925035.5**

(22) Date of filing: **05.11.1992**

(51) Int Cl.$^6$: **H01Q 25/00**, H01Q 1/28

(86) International application number:
**PCT/US92/09287**

(87) International publication number:
**WO 93/09578 (13.05.1993 Gazette 1993/12)**

(54) **SPACECRAFT ANTENNAS AND BEAM STEERING METHODS FOR SATELLITE COMMUNICATION SYSTEM**

Satellitenantennen und Strahlsteuerungsmethoden für Satelliten-Kommunikationssystem

ANTENNES DE SATELLITE ET PROCEDES DE COMMANDE D'ORIENTATION DE FAISCEAU POUR SYSTEME DE TELECOMMUNICATION PAR SATELLITES

(84) Designated Contracting States:
**AT BE CH DE DK ES FR GB GR IE IT LI NL SE**

(30) Priority: **08.11.1991 US 790271**

(43) Date of publication of application:
**24.08.1994 Bulletin 1994/34**

(73) Proprietor: **Teledesic Corporation Dover, DE 19901 (US)**

(72) Inventor: **LOCKIE, Douglas, Gene Los Gatos, CA 95030 (US)**

(74) Representative: **Powell, Stephen David et al WILLIAMS, POWELL & ASSOCIATES 34 Tavistock Street London WC2E 7PB (GB)**

(56) References cited:
**EP-A- 0 421 722**

- **ELECTRONICS AND COMMUNICATIONS IN JAPAN vol. 71, no. 5, May 1988, NEW YORK US pages 71 - 85 TESHIROGI ET AL. 'Multibeam Array Antenna for Data Relay Satellite'**
- **1990 INTERNATIONAL SYMPOSIUM DIGEST ANTENNAS AND PROPAGATION vol. II, May 1990, DALLAS,TX pages 778 - 781 JESPERSEN ET HERCZFELD 'Phased Array Antennas with Phasers and True Time Delay Phase Shifters'**
- **IEEE INTERNATIONAL CONFERENCE ON COMMUNICATIONS BOSTONICC/89 vol. 1, June 1989, BOSTON/MA pages 0216 - 0222 ESTABROOK ET AL. 'A 20/30 GHZ PERSONAL ACCESS SATELLITE SYSTEM DESIGN'**
- **OCEANS 89 September 1989, SEATTLE,USA pages 920 - 925 GAMBARUTO 'INMARSAT SECOND GENERATION SATELLITES FOR MARITIME COMMUNICATIONS'**
- **IEEE TRANSACTIONS ON COMMUNICATIONS vol. 39, no. 1, January 1991, NEW YORK US pages 141 - 151 ACAMPORA ET AL. 'A Metropolitan Area Radio System Using Scanning Pencil Beams'**
- **BBC RESEARCH DEPARTMENT REPORT. no. 12, 1989, TADWORTH GB pages 1 - 12 WAKELING 'BEAMFORMING DEVICES AND FEED STRUCTURES FOR A DBS FLAT-PLATE ANTENNA'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

CROSS-REFERENCES TO RELATED PATENT APPLICATIONS

The present patent application is related to the following co-pending patent applications.

WO 93/09613 - Satellite Communication System.

Method of Conducting a Telecomnunications Business Implemented on a Computer by Edward Fenton Tuck, assigned United States Serial Number 07/895,295;

WO 93/09577 - Terrestrial Antennas for Satellite Communication System.

WO 93/09624 - Switching Methods for Satellite Communication System.

WO 93/09614 - Beam Compensation Methods for Satellite Communication System.

WO 93/09029 - Spacecraft Designs for Satellite Communication System.

DESCRIPTION OF THE INVENTION

*TECHNICAL FIELD*

The present invention relates to the field of satellite communications. More particularly, this invention provides an advanced, active element, phased array satellite antenna system which provides extremely high gain, but which also uses the available spectrum with great efficiency. The power supplied by the invention enables telephone users on the ground to communicate directly with a constellation of spacecraft in low Earth orbit using a compact, hand-held terminal which does not pose radiation hazards.

*BACKGROUND ART*

Existing public phone systems rely primarily on land lines and microwave repeaters to handle call traffic. Recent expansions of cellular networks have enhanced phone service by providing access to the land based system to customers using mobile phones in their vehicles or hand-held portable units. The increased capacity offered to the subscriber is relatively small compared to the number of subscribers using conventional fixed phones, since cellular service is limited to only those geographical regions that are densely populated. Cellular communication is often afflicted by poor performance when customers travel from one cell to another, or when they traverse the radio shadows projected by terrain or buildings.

One previous radio communication system for a metropolitan area is disclosed in the article "IEEE Transactions on Communications, Vol 39, No.1, January 1991, pages 141 to 151, Acampora et al." The system comprises a centrally located base station which covers the surrounding service region with a plurality of scanning pencil beams operating with a Time Division Multiple Access assignment.

8298 BBC research Department Report (1989), No. 12, Tadworth Surrey, GB, discloses a beam forming device for a flat plate antenna with a time delay active lens serving to control beam steering.

One previous attempt to bypass the limits of conventional communications networks utilizes a transportable telephone that employs a satellite dish several feet in diameter to communicate directly with satellites in 22,300 mile geostationary orbits. The transponders on board these satellites then connect the caller directly to the land-based system, which directs their call through switches on the ground. These devices are heavy, difficult to transport and are prohibitively expensive.

Public phone companies do not currently offer continuous world-wide service to subscribers using a mobile or portable phone without the use of costly and large antenna systems. Commercial spacecraft and transponders that are presently on orbit do not generally possess the power capacity to communicate directly with terminals that are not coupled to an antenna dish that are at least a few feet in diameter. The service which is available is extremely limited and too expensive for use by all but a few. The problem of providing an economically viable network for voice, data and video which can be used by subscribers all over the world has presented a major challenge to the communications business. The development of a high power satellite system which can transmit and receive radio signals to portable, mobile and fixed terminals on the land and sea and in the air without the intermediate steps of routing traffic through land-based equipment would constitute a major technological advance and would satisfy a long felt need within the electronics and telephone industries.

DISCLOSURE OF INVENTION

According to the present invention there is provided an apparatus for providing radiated beams directed towards the Earth's surface and capable of communicating directly with a plurality of portable, mobile and fixed terminals, gateways and satellites comprising a plurality of antenna surfaces coupled and arranged in a generally contiguous pattern, each antenna surface being capable of generating a plurality of radiated beams which are electronically steered to footprint regions on the surface of the Earth, wherein each antenna surface has a plurality of radiating elements and incorporates a time delay active lens comprising a plurality of time delay networks, connected to respective radiating elements, and a time delay control to change the radius of the radiated beam, the arrangement being capable of producing a beam of circular or elliptical shape.

Apparatus according to the present invention comprises an advanced active element phased array antenna and utilizes electronic beam steering to provide extremely high gain signals. By incorporating these novel antenna systems on a constellation of low Earth orbit spacecraft, phone customers across the globe will be able communicate through a communication system whose switching intelligence resides on orbit. This unique configuration bypasses traditional land-based networks, and offers a revolutionary expansion of communications potential. The present invention is a vital element of a novel *Satellite Communication System,* which is referred to above.

The innovative design of one of the preferred embodiments employs a hemispherical configuration of hexagonal antenna facets fabricated from ultra-light weight honeycomb materials and advanced composites. Gallium-arsenide (GaAs) millimeter wave integrated circuits (MMIC) coupled to each antenna panel handle call traffic. Each antenna simultaneously generates 256 beams which are electronically steered to 4,096 portions on the surface of the Earth. Each individual beam illuminates a region on the ground that measures roughly twenty kilometers by twenty kilometers.

An appreciation of other aims and objectives of the present invention and a more complete and comprehensive understanding of this invention may be achieved by studying the following description of a preferred embodiment and by referring to the accompanying drawings.

*BRIEF DESCRIPTION OF THE DRAWINGS*

Figure 1 is perspective view of a satellite that includes a hemispherical array of hexagonal antenna facets and fully extended rectangular solar panels.

Figure 2 depicts a schematic diagram of the satellite similar to the one illustrated in Figure 1. Figure 2 also reveals three sets of electronically steered beams produced by the hexagonal antennas and the circular and elliptical footprints which the beams illuminate on the Earth's surface.

Figure 3 presents a schematic depiction of the pattern of multiple beams generated by the satellite shown in Figures 1 and 2.

Figures 4 and 5 are plots that reveal the geometric relationship of several spacecraft traveling in one of the many orbital planes in the satellite constellation. The pathways between neighboring satellites that are not occluded by the limb of the Earth provide communication links between spacecraft in the same orbit.

Figure 6 reveals a schematic diagram of a GaAs MMIC time delay network.

Figure 7 shows a schematic of the active lens, which includes a large number of the time delay networks shown in Figure 6.

Figure 8 is a schematic illustration of an active lens which incorporates a time delay steered antenna array.

*BEST MODE FOR CARRYING OUT THE INVENTION*

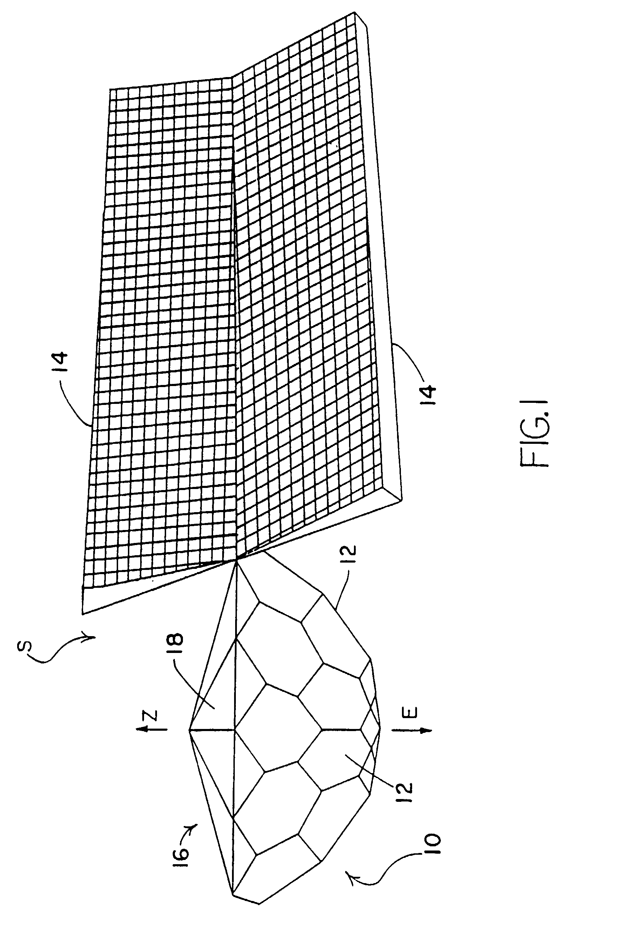

Figure 1 depicts one of the preferred embodiments of the antennas. This perspective schematic view shows a satellite S that includes an array 10 of generally hexagonal antenna Earth-facing facets 12 that are mated together along their six-sided boundaries to form a slightly flattened, hemispherical shell. A space-facing array 16 that includes facets 18 is mated to the Earth facing array 10. The antenna shell is connected to two generally rectilinear, unfurled, solar panels 14 which trail the body of the spacecraft S.

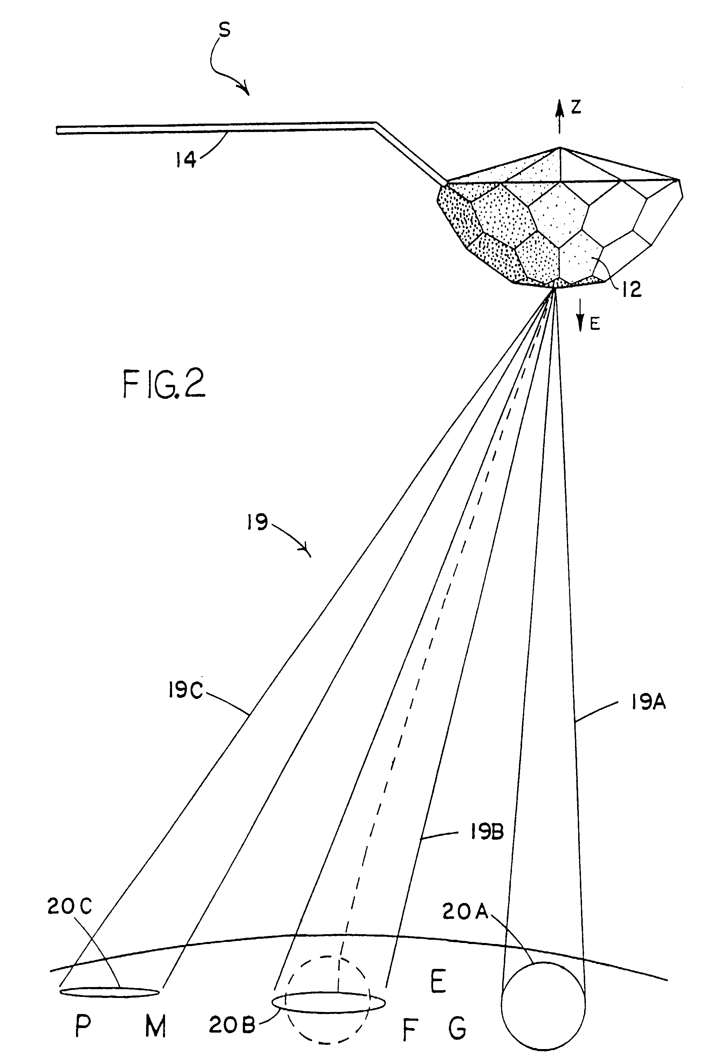

Figure 2 depicts a schematic diagram of a similar satellite S, and also reveals three sets of electronically steered beams 19 produced by the hexagonal antennas 12 and the circular and elliptical footprints 20 which the beams 19 illuminate on the Earth's surface. The footprints 20 of the radio beams 19 are shown as regions of "illumination" on various portions of the Earth's surface E. These beams provide communications services to subscribers using portable (P), mobile (M) and fixed (F) terminals and gateways (G). The set of beams marked 19a travel the shortest possible distance from the spacecraft S to the Earth E because these beams 19a travel along a pathway which runs from the ground to the zenith Z and back. The area on the surface illuminated by this set of beams 19a results in a generally circular footprint 20a. Other sets of beams, like those marked 19b and 19c, are more inclined to the line that runs from the center of the Earth toward the zenith Z, and the areas 20b and 20c irradiated by these beams 19b and 19c, unless connected, become progessively more elliptical as the angle of inclination becomes larger.

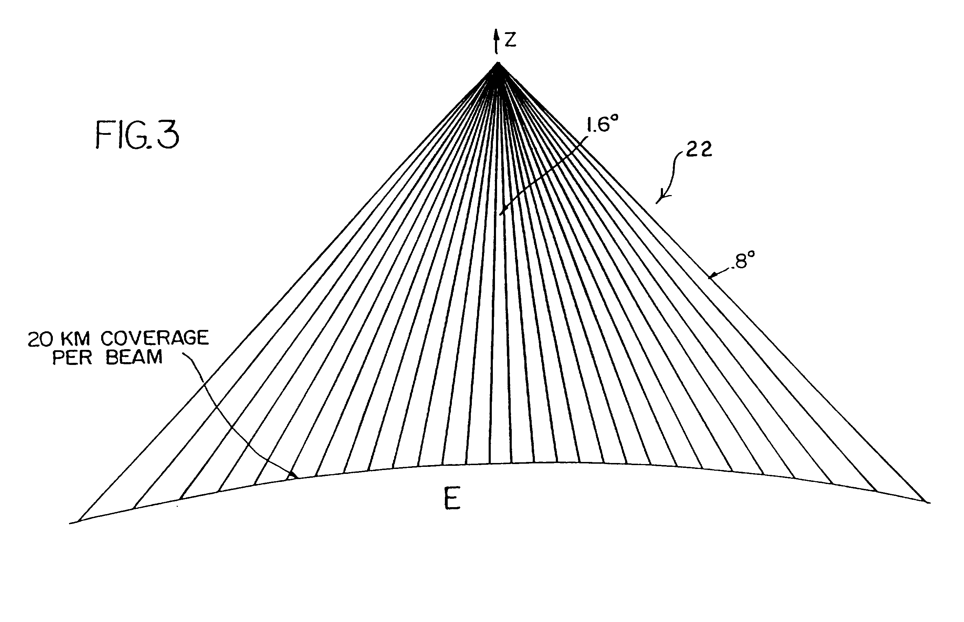

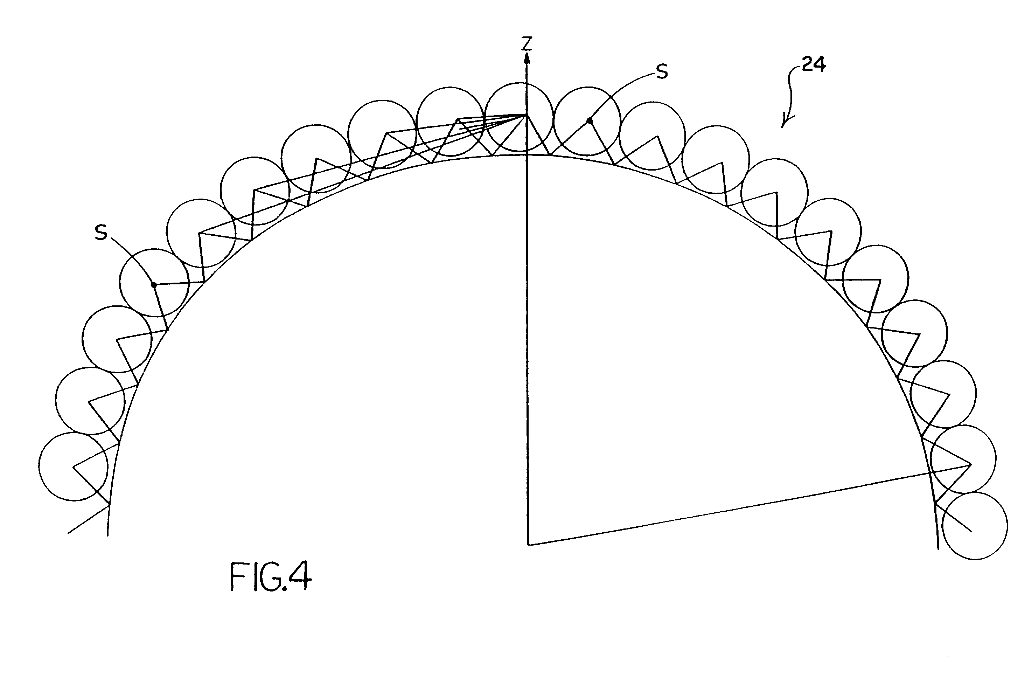

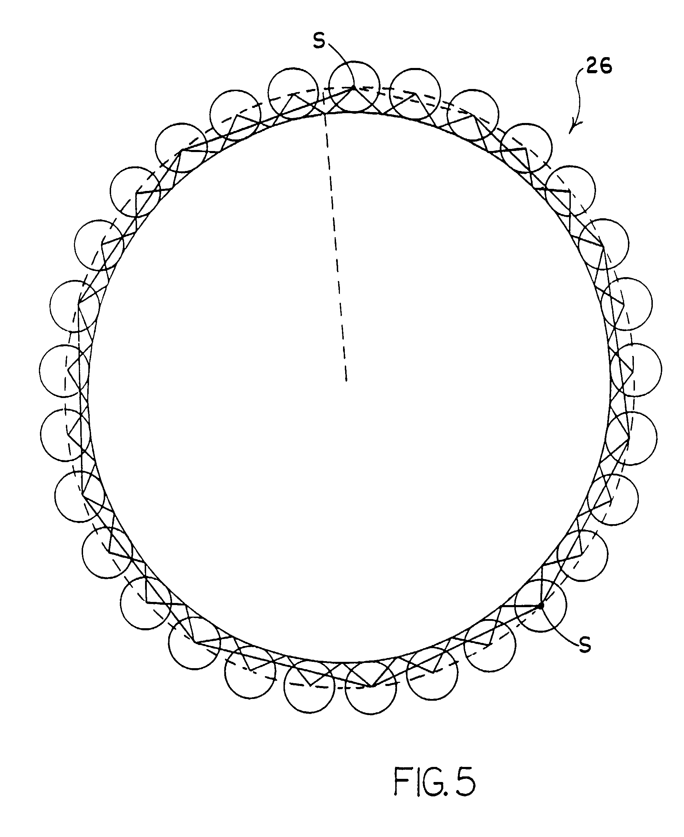

Figure 3 combines many sets of beams and portrays a complete set of line-of-sight radio waves 22 generated by one spacecraft. Figures 4 and 5 are geometric plots 24 and 26 which include sight lines between neighboring satellites that travel along the same orbit. These plots 24 and 26 reveal the geometric relationship of several spacecraft S traveling in one of the many orbital planes in the satellite constellation. The pathways between neighboring satellites that are not occluded by the limb of the Earth provide communication links between spacecraft S in the same orbit.

In one of the preferred embodiments of the invention, the satellites shown in Figures 1 and 2 operate in a constellation which includes 29 sets of spacecraft flying in 29 orbits. The entire fleet travels around the Earth at a height of 700 km (435 miles). In this embodiment, the antenna facets or surfaces 12 are designed to transmit and receive signals from terrestrial units that are located within the footprints 20 produced by the electronically steered beams 19. Only those terrestrial units that are within the conical line-of-sight region that is defined by a minimum elevation angle, or "mask angle," of 40 degrees can be serviced by a particular spacecraft. The hexagonal antenna facets 12 and their related signal processing circuitry produce a hexagonal coverage pattern. In one embodiment of this invention, the radius to the center of each of the six sides of each facet 12 is 6.2 degrees, while the radius to the six corners of the hexagon subtends 7.16 degrees. A spacing of 12.41 degrees allows for 29 hexagonal coverage patterns in each orbital plane. A similar spacing along the equator results in 29 orbital planes. This configuration of hexagonal facets 12 offers double coverage in the equatorial regions and up to eight-fold coverage at higher latitudes, where larger numbers of subscribers are located. By selecting an odd number of satellites and planes, the center of the descending patterns will fall on the seams of the ascending patterns. This selection insures that virtually every region on the surface between the latitudes of 70 degrees North and South will be serviced by the constellation.

In general, and allowing for the somewhat inaccurate assumption that the Earth is spherical, the coverage angle of each satellite is given by the expression:

$$2a = 2\arcsin\left(\frac{r\cos\theta}{r+h}\right)$$

where

    a is the half angle of the cone of Earth coverage in radians;
    $\theta$ is the user antenna mask angle in radians;
    r is the radius of the Earth (6378 km); and
    d is the height of the orbit (700 km).

Orbits of 700 km and a 40 degree user antenna mask angle yield a coverage of 87.3 degrees. The slant range at the edge of the Earth coverage cone is determined by the equation:

$$d = \sqrt{((r+h)^2 - r^2)\cos^2\theta} - r\sin\theta = 1022\,km$$

The Earth coverage area of the cone is:

$$A = \pi(d^2 + h^2 - 2dh\cos(a)) = 1,568,000\,km^2$$

This quantity represents the Earth coverage area of each satellite if the entire circular footprint is utilized. As described above in the copending patent application that describes *Beam Compensation Methods* this area is divided into 256 supercells and each supercell is further divided into 16 smaller individual cells. The total number of cells created by each spacecraft is then 256 x 16, or 4,096. Each of these 4,096 cells has an area of 383 km². If each cell is square, they measure approximately 19.6 km on a side. Although the preferred embodiment of the invention utilizes circular footprints 20, the footprints created by the satellites need not be circular. Any regular polygon inscribed in the circle may be effectively employed. Other alternative embodiments employ inscribed squares and inscribed hexagons. The area of the square is 63.7% of the total area, while the area of the hexagon is 82.7% of the total area. If the cell size is maintained constant, then the resulting numbers of cells are 2,609 for the square and 3,387 for the hexagon.

The spaceborne antenna facets or surfaces 12 are capable of providing a gain of 45 dB at the periphery of each footprint and 42 dB at the nadir position. Because the beams generated by the spaceborne antenna facets 12 are so powerful, Earth-based terminals can incorporate low power antenna designs which substantially eliminate any radiation hazards that might otherwise harm the user. Each antenna uses a combination of the 20 and 30 Ghz frequency bands for satellite to ground communications, and propagates 256 simultaneous beams, which are multiplexed to 4,096 positions. Beams aimed at the horizon possess an elliptical, as opposed to a circular or polygonal, shape to compensate for the low grazing angle, so that a constant Earth coverage footprint is maintained. Uncorrected beams have an elliptical ground pattern which degrades spectral reuse efficiency. Electronic beam steering also permits the independent control of directivity gain and power gain. The beam steering provides a convenient method of correcting power levels during rain fades. The transmitted power gain from the satellite can be increased on transmit to overcome downlink fading. Satellite receive power gain can be increased during receive to overcome uplink fading. The use of these two techniques overcomes possibly poor communication performance during rainy weather conditions.

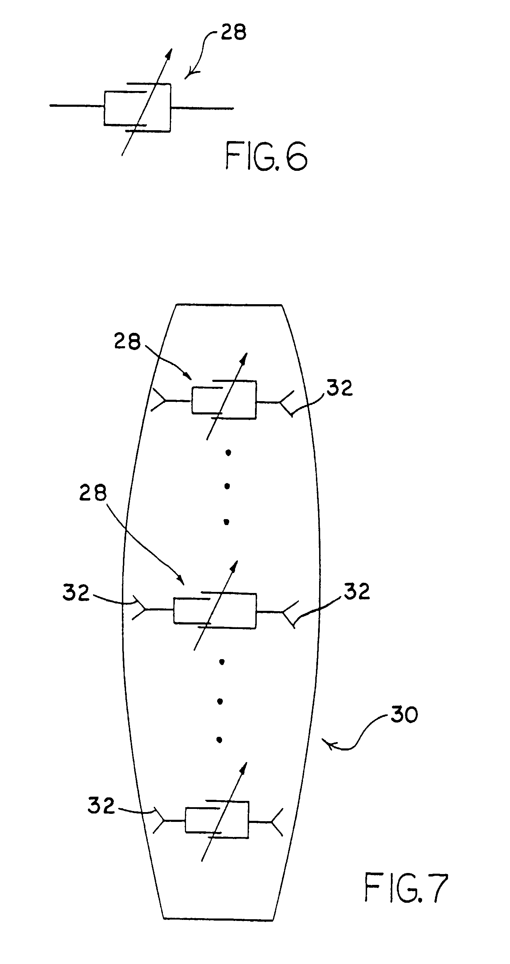

Signal processing components residing in the spacecraft include GaAs MMIC filters and are responsible for electronically steering active antenna arrays on board each satellite. Figure 6 reveals a schematic diagram of a GaAs MMIC time delay network 28. Figure 7 shows a schematic of the active lens 30, which includes a large number of the time delay networks 28 coupled to radiating elements 32. In the preferred embodiment of the present invention, a circuit Model No. TD101 produced by Pacific Monolithics, Inc. in California is employed as the time delay network. Other more conventional time delay networks may also be employed. The electronic steering is accomplished by using these time delay networks 28 to create an active lens 30. The focal point of the lens 30 is related to the directivity gain of the antenna facet 12 and can be controlled electronically. The ability to control the directivity gain is important for communications satellites in low Earth orbit because less gain is needed when a cell is addressed at the satellite Nadir than when a cell is addressed at the periphery of the satellite footprint 20. It is also desirable to increase the directivity gain in the elevation plane when addressing a cell at the satellite footprint periphery. The active lens 30 incorporated in the antenna facets 12 allows these variable directivity gains to be implemented without the reduction in efficiency that is associated with conventional antenna arrays. The active lens 30 illustrated in Figure 7 is the microwave analog of an optical lens. By increasing the time delay for the signal paths in the center of the lens with respect to the edge of the lens, the focal length of the lens can be changed electronically, which, in turn, changes the directivity gain of the antenna facets 12.

The antenna facets 12 provide electronic steering which is sufficiently accurate to implement a practical gain variation in the 42 dB to 45 dB regime. For example, changing the radius of a radiation pattern by 200 meters at a range of 1200 kilometers requires a time delay control of 4 picoseconds for a 45 dB gain antenna array with dimensions of 1.2 meters on a side. Active lens control for the 42 to 45 dB range (in a 20/30 GHz system) requires time delays on the order of 4 picoseconds to 35 picoseconds.

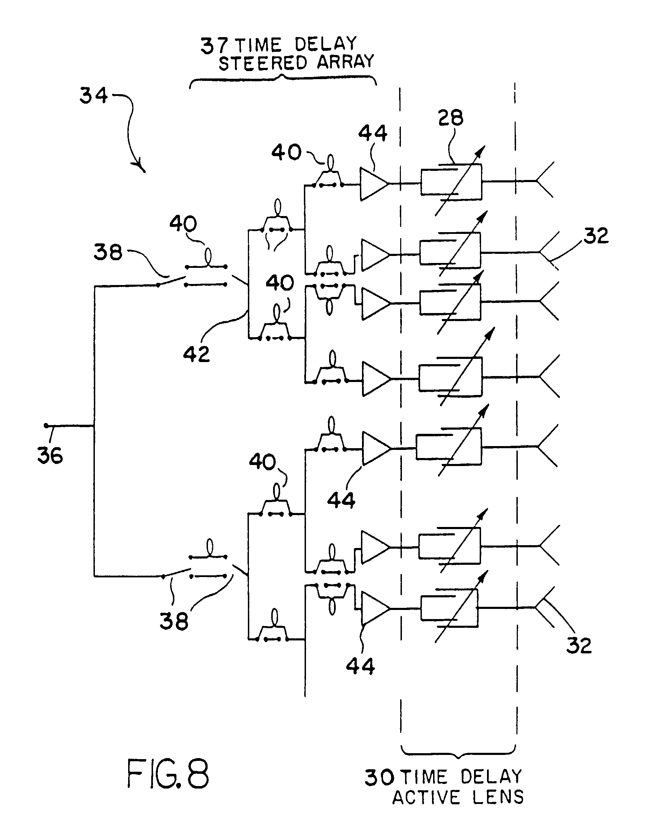

The active lens 30 can be constructed using one of two techniques. The first, which is depicted in Figure 7, utilizes a conventional lens that includes many pairs of receive and transmit antennas that are each connected in series with an active time delay network. The second technique, which comprises the preferred embodiment of the invention, is a time delay circuit 34 exhibited in Figure 8. This circuit 34 includes a feed 36 coupled to a time delay steered array 37 which comprises a series of switches 38, time delay paths 40, transmission lines 42 and amplifiers 44. The time delay steered array 37 is connected to the time delay active lens 30 and to radiating elements 32.

The switched time delay networks 28 in the corporate feed accomplish beam steering functions. The time delay networks 28 can be adjusted for either fine gain beam steering (a few degrees) or for changing the directivity gain of the antenna (focal length of the lens).

Every satellite S controls the assignment of channels to terminals requesting services. When a terminal has more than one satellite in view, the satellites monitor the signal quality and select which one is best suited to handle the call to the terminal. The receive beam from the ground terminal lags the transmit beam emitted from the satellite by a fixed interval. The terminal transmits its data to the satellite at a delay specified by the satellite in its preceding scan. This method is used to compensate for delay differences caused by variations in path lengths. The scan pattern among beams is coordinated to insure that all cells being scanned at one instant are separated by sufficient distance to eliminate interference among many closely-spaced customers. An electronic pushbroom carries the beams through one beam position in the direction of satellite travel, and then performs a flyback. Each beam carries a pilot tone which identifies each beam for terrestrial terminals. Components on board each satellite measure time delay and Doppler shift of each subscriber signal to determine the location of the subscriber within a particular beam footprint. Because the satellite antennas operate at a relatively high gain, the footprints on the ground are relatively small. Since the cells are small and the satellite footprint moves rapidly over the Earth's surface, any particular terminal remains in the same cell for only a few seconds. To avoid the rapid handoff from satellite to satellite every few seconds, the innovative logical/physical cell mapping scheme described in the copending patent application on *Beam Compensation* is utilized in conjunction with the present invention.

Several spacecraft in a single orbital plane can communicate with each other if they are located above the horizon of the Earth. Satellites communicate among one another using a 60 Ghz inter-satellite frequency band. In one of the preferred embodiments, a 1.5 foot antenna provides approximately 45 Db of gain which supports a practical inter-satellite link (ISL). Four fixed and two electronically steerable antennas are used on each satellite for ISL links. Optional links in the orbital plane may increase the number of ISL antennas to ten, eight of which would be fixed and two of which would be steerable.

A second preferred embodiment comprises satellites circling in 21 orbital planes with 40 satellites S in each orbit. This 21 x 40 embodiment can be implemented using the same antenna facets 12 which may be modified to account for the increased population of the constellation.

## CONCLUSION

Although the present invention has been described in detail with reference to a particular preferred embodiment, persons possessing ordinary skill in the art to which this invention pertains will appreciate that various modifications and enhancements may be made without departing from the spirit and scope of the claims that follow. The various orbital parameters and satellite population and configuration statistics that have been disclosed above are intended to educate the reader about one preferred embodiment, and are not intended to constrain the limits of the invention or the scope of the claims. The List of Reference Characters which follows is intended to provide the reader with a convenient means of identifying elements of the invention in the specification and drawings. This list is not intended to delineate or narrow the scope of the claims.

## INDUSTRIAL APPLICABILITY

The *Spacecraft Antennas and Beam Steering Methods for Satellite Communication System* described above will help to overcome the limits that circumscribe the performance and potential of existing telephone systems. The present invention is capable of offering continuous voice, data and video service to customers across the globe on the land, on the sea, or in the air. Instead of merely improving upon or expanding existing land-based systems, the present invention bypasses centralized terrestrial switching hardware by placing all the intelligence of the network in orbit. Unlike conventional hierarchical systems, which are linked together by a complex web of wires, cables, glass fibers, and microwave repeaters that are very expensive to build and maintain, the present invention liberates the true communications potential of existing land-based networks by routing signals through spacecraft in low Earth orbit. The present invention will revolutionize the telecommunications industry, and offer a wide spectrum of services and industrial opportunities around the world.

*LIST OF REFERENCE CHARACTERS*

| | |
|---|---|
| 10 | Earth-facing antenna array |
| 12 | Hexagonal antenna surfaces |
| 14 | Solar panels |
| 16 | Space facing array |
| 18 | Space-facing facets |
| 19 | Electronically steered beams |
| 20 | Footprints |
| 22 | Line-of-sight radio waves |
| 24&26 | Geometric plots |
| 28 | GaAs MMIC time delay network |
| 30 | Time delay active lens |
| 32 | Radiating elements |
| 34 | Time delay circuitry |
| 36 | Feed |
| 37 | Time delay steered array |
| 38 | Switches |
| 40 | Time delay paths |
| 42 | Transmission lines |
| 44 | Amplifiers |

| | |
|---|---|
| E | Earth |
| F | Fixed terminal |
| G | Gateway |
| M | Mobile terminal |
| P | Portable terminal |
| S | Spacecraft |
| Z | Zenith |

**Claims**

1. An apparatus for providing radiated beams (19) directed towards the Earth's surface and capable of communicating directly with a plurality of portable (P), mobile (M) and fixed (F) terminals, gateways (G) and satellites (S) comprising a plurality of antenna surfaces (12) coupled and arranged in a generally contiguous pattern, each antenna surface (12) being capable of generating a plurality of radiated beams (19) which are electronically steered to footprint regions (20) on the surface of the Earth (E), wherein each antenna surface (12) has a plurality of radiating elements (32) and incorporates a time delay active lens (30) comprising a plurality of time delay networks (28), connected to respective radiating elements (32), and a time delay control to change the radius of the radiated beam, the arrangement being capable of producing a beam of circular or elliptical shape.

2. An apparatus according to claim 1, wherein said networks (28) comprise GaAs MMIC time delay networks.

3. An apparatus according to claim 1 or 2, wherein the antenna surface (12) are substantially hexagonal in shape.

4. An apparatus according to any preceding claim, wherein the antenna surfaces (12) are each capable of emitting and receiving beams (19) over a cone measuring at least 25 degrees.

5. An apparatus according to any preceding claim, wherein a time delay steered array (37) is connected to the lens (30).

6. An apparatus according to claim 4, wherein the array (37) comprises a series of switches (38) and delay paths (40).

7. An apparatus according to any preceding claim, wherein there are at least 14 antenna surfaces (12) forming a pattern which approximates the contour of a partially oblate hemisphere, each surface being capable of simultaneously generating at least 256 beams (19) which can be electronically steered to approximately 4,096 positions on the surface of the Earth (E), each beam illuminating a footprint (20) on the earth measuring approximately 20 kilometres by 20 kilometres at a gain of at least 40 dB, and each surface (12) having a plurality of pairs of antennas for separately transmitting and receiving each of said beams (19).

**Patentansprüche**

1. Vorrichtung zum Bereitstellen von ausgestrahlten Strahlen (19), welche in Richtung der Oberfläche der Erde gerichtet ist und in der Lage ist, direkt zu kommunizieren mit einer Mehrzahl von tragbaren (P), mobilen (M) und festen (F) Anschlußeinheiten, Überleiteinrichtungen (G) und Satelliten (S), umfassend eine Mehrzahl von Antennenflächen (12), die in einem im großen und ganzen aufeinanderfolgenden Muster angekoppelt und angeordnet sind, wobei jede Antennenfläche (12) in der Lage ist, eine Mehrzahl von ausgestrahlten Strahlen (19) zu erzeugen, die elektronisch gelenkt werden zu Ausleuchtgebieten (20) auf der Oberfläche der Erde (E), wobei jede Antennenfläche (12) eine Mehrzahl von abstrahlenden Elementen (32) aufweist und eine zeitverzögerungsaktive Linse (30) umfaßt, die eine Mehrzahl von Zeitverzögerungs-Netzwerken (28) umfaßt, welche eine Verbindung haben zu entsprechenden abstrahlenden Elementen (32), und eine Zeitverzögerungskontrolle, um den Radius des abgestrahlten Strahls zu ändern, wobei die Anordnung in der Lage ist, einen Strahl mit zirkularer oder elliptischer Form zu erzeugen.

2. Vorrichtung nach Anspruch 1, wobei die Netzwerke (28) GaAs-MMIC-Zeitverzögerungs-Netzwerke umfassen.

3. Vorrichtung nach Anspruch 1 oder 2, wobei die Antennenflächen (12) im wesentlichen hexagonal in der Form sind.

4. Vorrichtung nach einem der vorangehenden Ansprüche, wobei die Antennenflächen (12) jeweils in der Lage sind, Strahlen (19) zu emittieren und zu empfangen über einen Kegel, welcher mindestens 25 Grad mißt.

5. Vorrichtung nach einem der vorangehenden Ansprüche, wobei eine zeitverzögerungs-gelenkte Anordnung (37) mit der Linse (30) verbunden ist.

6. Vorrichtung nach Anspruch 4, wobei die Anordnung (37) eine Folge von Schaltern (38) und Verzögerungspfaden (40) umfaßt.

7. Vorrichtung nach einem der vorangehenden Ansprüche, wobei diese mindestens 14 Antennenflächen (12) umfaßt, die ein Muster bilden, welches sich an die Kontur einer teilweise abgeplatteten Halbkugel annähert, wobei jede Fläche in der Lage ist, gleichzeitig mindestens 256 Strahlen (19) zu erzeugen, die elektronisch auf ungefähr 4096 Positionen auf der Oberfläche der Erde (E) gelenkt werden können, wobei jeder Strahl ein Ausleuchtgebiet (20) auf der Erde ausleuchtet, welches ungefähr 20 Kilometer auf 20 Kilometer bei einer Verstärkung von mindestens 40 dB mißt, und jede Fläche (12) hat eine Mehrzahl von Paaren von Antennen zum getrennten Senden und Empfangen von jedem der Strahlen (19).

**Revendications**

1. Appareil pour délivrer des faisceaux hertziens (19) dirigés vers la surface terrestre et capable de communiquer directement avec une série de terminaux portables (P), mobiles (M) et fixes (F), de passerelles (G) et de satellites (S) comprenant une série de surfaces d'antennes (12) couplées et agencées selon une configuration générale contiguë, chaque surface d'antenne (12) étant à même de générer une série de faisceaux hertziens (19) qui sont électriquement orientés vers des régions d'empreinte (20) à la surface de la terre (E), appareil dans lequel chaque surface d'antenne (12) a une série d'éléments rayonnants (32) et contient une lentille active (30) à temporisation comprenant une série de réseaux de temporisation (28), connectés à des éléments rayonnants respectifs, et une commande de temporisation pour modifier le rayon du faisceau hertzien, l'agencement étant à même de produire un faisceau de forme circulaire ou elliptique.

2. Appareil selon la revendication 1, dans lequel lesdits réseaux (28) comprennent des réseaux de temporisation MMIC de GaAs.

3. Appareil selon la revendication 1 ou 2, dans lequel les surfaces d'antenne (12) ont une forme sensiblement hexagonale.

4. Appareil selon l'une quelconque des revendications précédentes, dans lequel les surfaces d'antenne (12) sont individuellement capables d'émettre et de recevoir des faisceaux (19) selon un cône mesurant au moins 25 degrés.

5. Appareil selon l'une quelconque des revendications précédentes, dans lequel un réseau (37) orienté de temporisation est connecté à la lentille (30).

6. Appareil selon la revendication 4, dans lequel le réseau (37) comprend une série de commutateurs (38) et des trajets de temporisation (40).

7. Appareil selon l'une quelconque des revendications précédentes, dans lequel il y a au moins 14 surfaces d'antenne (12) formant une configuration qui se rapproche du contour d'un hémisphère partiellement aplati aux pôles, chaque surface étant à même de générer simultanément au moins 256 faisceaux (19) qui peuvent être orientés électroniquement sur environ 4.096 positions à la surface de la terre (E), chaque faisceau couvrant une empreinte (20) sur la terre mesurant approximativement 20 kilomètres par 20 kilomètres avec un gain d'au moins 40 dB, et chaque surface (12) ayant une série de paires d'antennes pour émettre et recevoir séparément chacun desdits faisceaux (19).

FIG.1

EP 0 611 491 B1

FIG.2

FIG.3

FIG.4

EP 0 611 491 B1

S

26

S

FIG.5

28

FIG. 6

28

32

28

32

32

30

32

FIG. 7

FIG.8

37 TIME DELAY STEERED ARRAY

30 TIME DELAY ACTIVE LENS